# FASCICULE DE BREVET EUROPEEN

(11) **EP 0 683 346 B1**
(45) Date de publication et mention de la délivrance du brevet: **22.12.1999**
(21) Numéro de dépôt: 95200922.3
(22) Date de dépôt: 12.04.1995
(51) Int. Cl.: F16L 55/124, F16K 7/10

(54) **Dispositif pour l'obturation d'une tuyauterie**
Vorrichtung zum Verschliessen einer Rohrleitung
Device for plugging a pipeline

(30) Priorité: 22.04.1994 BE 9400417
(43) Date de publication de la demande: 22.11.1995
(73) Titulaire: POLVA PIPELIFE B.V., 1600 AJ Enkhuizen (NL)
(72) Inventeur: Guitoneau, Hans, NL-1613 DH Grootebroek (NL)
(74) Mandataire: de Bruijn, Leendert C.

(56) Documents cités:
- DE-A- 4 105 446
- GB-A- 2 137 718
- US-A- 5 285 806

## Description

La présente invention concerne un dispositif d'obturation d'une tuyauterie, destiné à coopérer avec un élément essentiellement tubulaire fixé perpendiculairement à la tuyauterie, ledit dispositif comprenant un tube amovible dans lequel peut coulisser une barre creuse à laquelle est fixée une tige souple autour de laquelle est disposé un ballon gonflable, un appendice étant fixé à l'extrémité de ladite tige souple et ledit ballon étant en communication avec l'intérieur de la barre creuse.

Un tel dispositif est décrit dans le document US-A-5285806.

Cette solution, qui ne nécessite pas la présence de vannes, consiste à introduire, en un point adéquat de la tuyauterie, par un orifice percé dans la paroi de celle-ci, un ballon gonflable, et à le gonfler de façon à ce qu'il obture totalement la tuyauterie. Si ce ballon est introduit dans la tuyauterie sans précautions particulières, il va se placer en regard de l'orifice percé dans la paroi de la tuyauterie, qui, surtout du côté de l'intérieur de la tuyauterie, présente généralement des bavures, susceptibles de faire éclater le ballon. En outre, il importe que le ballon soit disposé "en amont" de l'orifice, c'est-à-dire du côté de l'orifice où la pression sera maintenue pendant les travaux. C'est en effet dans cette position qu'il résiste le mieux à la pression du fluide, celle-ci contribuant alors à le déformer de manière à l'appliquer encore davantage contre la paroi de la tuyauterie. Si par contre le ballon est placé dans la direction opposée ("en aval" de l'orifice), les déformations provoquées par la pression risquent de permettre le passage de fluide entre le pourtour du ballon et les parois de la tuyauterie, entraînant ainsi le risque d'une fuite vers la section de tuyauterie que l'on désirait isoler.

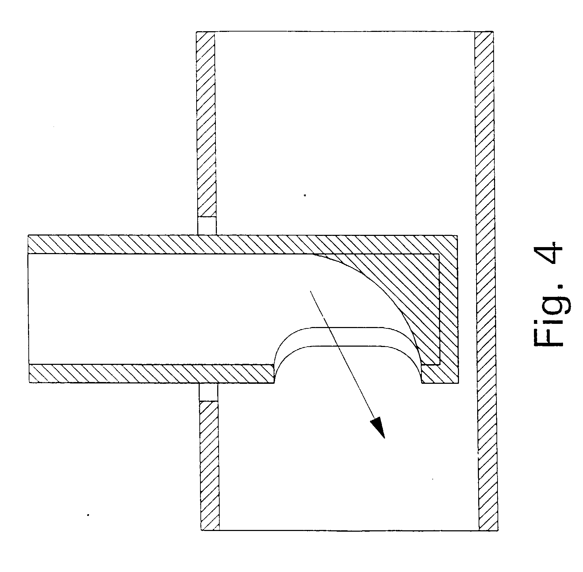

Une solution déjà proposée à ce problème du positionnement du ballon "en amont" de l'orifice consiste à introduire dans la tuyauterie, perpendiculairement à son axe, un tube dont l'extrémité inférieure est munie d'une ouverture latérale, de manière à ce que cette extrémité atteigne approximativement la paroi de la tuyauterie opposée à l'orifice. Cette extrémité du tube est intérieurement munie d'un arrondi conduisant le ballon, initialement disposé à l'intérieur du tube, à en sortir dans une direction bien déterminée. En orientant convenablement le tube avant d'en faire sortir le ballon, il est ainsi possible de placer celui-ci à l'endroit souhaité avant de le gonfler. La figure 4 décrit schématiquement un dispositif de ce type.

Cette solution présente cependant de nombreux inconvénients : ainsi, en raison de sa complexité, ce système est coûteux à réaliser. Ensuite, ce qui est plus grave, il provoque des fuites de fluide sous pression lors de son introduction dans la tuyauterie et de son retrait, en raison de la hauteur importante de l'ouverture latérale aménagée dans sa paroi nécessaire pour permettre la sortie latérale du ballon. L'utilisation d'un élément tubulaire muni de dispositifs d'étanchéité tels que des joints, ou encore d'un raccord de dérivation comme décrit notamment dans le document EP 580222 (SOLVAY), permettrait certes d'éviter toute fuite lorsque ce tube est en position de fonctionnement (introduit à fond dans la tuyauterie) ou complètement retiré. Mais lorsque l'ouverture latérale du tube se trouve temporairement à la hauteur des joints d'étanchéité disposés dans l'élément tubulaire, le fluide sous pression présent dans la tuyauterie pénétrerait dans le tube sous le niveau de ces joints, et en ressortirait au-dessus, s'échappant ainsi librement vers l'extérieur. Enfin, lors de l'introduction et du retrait du tube, les bords de son ouverture latérale risquent d'endommager, voire d'extraire de leurs logements, les joints d'étanchéité.

Pour ces raisons, il est généralement souhaitable de disposer d'un dispositif simple permettant d'obturer sélectivement l'une ou l'autre des portions de tuyauterie situées de part et d'autre de l'orifice, et évitant tout risque de fuite et tout endommagement des joints éventuels. Il convient en outre que ce dispositif soit aisé installer et à retirer, et d'un faible coût.

A cette fin, l'invention concerne un ballon gonflable pour l'obturation d'une tuyauterie, qui se caractérise en ce que l'appendice est d'une forme asymétrique apte à favoriser la déviation du ballon dans un sens bien précis lors de son installation dans une tuyauterie.

Par ballon gonflable, on entend désigner tout corps creux déformable muni d'une ouverture étroite, dont le volume soit susceptible de croître fortement sous l'action d'un fluide sous pression que l'on y injecte par ladite ouverture. Le ballon peut être constitué de tout matériau couramment utilisé pour la fabrication d'articles gonflables tels que des ballons, des chambres à air, etc., par exemple d'une matière plastique élastomérique telle que le caoutchouc. La forme et les dimensions de ce ballon doivent être telles qu'à l'état dégonflé il puisse être introduit et retiré sans difficultés de la tuyauterie, par l'orifice percé dans la paroi de celle-ci, et qu'à l'état gonflé il s'applique fermement sur la paroi intérieure de la tuyauterie, de manière à l'obturer de manière étanche. Il est avantageux que ce ballon puisse être muni d'un dispositif de fermeture permettant d'y emprisonner de manière étanche le fluide sous pression que l'on y a injecté. Il est également avantageux que le ballon puisse être raccordé aisément à une source de fluide sous pression, par exemple au moyen d'un embout fileté, et de prévoir, sur la canalisation reliant le ballon à cet embout, une vanne d'arrêt. De préférence, le ballon est gonflé au moyen d'air comprimé.

Selon une variante, le ballon peut être revêtu ou enveloppé d'un matériau présentant un faible coefficient de frottement, afin de faciliter son insertion dans la tuyauterie et son retrait.

Une type d'appendice asymétrique donnant de bons résultats est celui dans lequel, si on définit l'axe du ballon comme étant la droite joignant le centre de son ouverture au point opposé, il existe au moins un plan contenant cet axe tel que l'intersection de l'appendice et de ce plan définisse une figure dont le sommet (opposé à l'ouverture du ballon) soit sensiblement excentré par rapport audit axe, le côté de cette figure possédant une intersection avec cet axe présentant une forme convexe apte à favoriser la déviation du ballon dans le sens opposé lors de son installation. Un type d'appendice donnant de très bons résultats est celui dont la section a approximativement la forme d'un quart d'ellipse. De préférence, l'appendice ne présente pas d'arêtes vives.

De préférence, l'appendice est fixé au ballon sur une zone opposée à son ouverture, qui sera appelée ci-dessous le sommet du ballon. Cet appendice joue un rôle capital lors de l'introduction du ballon dans une tuyauterie : lorsque l'appendice entre en contact avec la paroi intérieure de la tuyauterie, en un point situé approximativement à l'opposé de l'orifice, sa forme asymétrique dévie le ballon d'un côté bien déterminé de l'orifice par lequel on a introduit le ballon. Cet appendice permet donc d'installer le ballon à un endroit bien précis de la tuyauterie, et d'isoler une portion déterminée de cette dernière. L'orientation angulaire que l'on aura donnée au ballon par rapport à son axe en l'introduisant dans la tuyauterie déterminera laquelle des deux portions situées de part et d'autre de l'orifice sera isolée.

L'appendice en question est constitué d'un ou plusieurs matériaux quelconques. Il est toutefois nécessaire qu'il possède une rigidité suffisante, lui permettant de conserver substantiellement sa forme lorsqu'il entre en contact avec la paroi intérieure de la tuyauterie. Si l'appendice est trop mou, il ne joue aucun rôle et le ballon prend une position aléatoire, qui risque ultérieurement de conduire à une étanchéité imparfaite. Il est en outre utile que la surface extérieure de l'appendice, destinée à entrer en contact avec la paroi intérieure de la tuyauterie, présente un coefficient de frottement aussi faible que possible, pour les mêmes raisons.

L'appendice peut avoir été fixé au ballon par tout moyen connu et adéquat de fixation ne nuisant pas à l'étanchéité du ballon, par exemple par collage, pinçage ou soudage.

Selon une variante intéressante, l'appendice est en outre fixé à l'extrémité d'une tige souple traversant le ballon de part en part. Cette tige doit être suffisamment flexible pour permettre à son extrémité, et donc à l'appendice situé au sommet du ballon, après leur introduction dans la tuyauterie, perpendiculairement à l'axe de celle-ci, de s'orienter dans une direction approximativement parallèle à cet axe. Il est par ailleurs souhaitable que cette tige soit relativement rigide sur le plan de la torsion, afin que l'appendice asymétrique reste correctement orienté durant la mise en place du ballon. Cette tige peut être faite de tout matériau souple connu. Elle peut par exemple consister en un ressort spiralé relativement rigide, ou encore en un barreau de matière plastique. Le rôle de cette tige, dont une extrémité est de préférence accessible et manipulable, directement ou indirectement, à partir de l'extérieur, est de faciliter l'insertion du ballon dans la tuyauterie, et en particulier d'éviter toute désorientation de l'appendice.

L'indication selon laquelle la tige souple traverse le ballon de part en part doit être interprétée de façon large : ainsi, non seulement la tige peut réellement traverser l'intérieur du ballon, mais, de manière équivalente, le ballon peut tout aussi bien avoir une forme sensiblement toroïdale et entourer cette dernière à la manière d'une bague.

De manière avantageuse, le ballon décrit ci-dessus s'utilise en combinaison avec un élément tubulaire fixé perpendiculairement à la tuyauterie. Cet élément tubulaire peut notamment faire intégralement partie de la tuyauterie, y avoir été soudé, ou y avoir été fixé, fermement et de manière étanche, par exemple au moyen de deux éléments en forme de selles semi-cylindriques. Il est avantageux que cet élément tubulaire comporte un ou plusieurs dispositifs d'étanchéité évitant toute fuite lorsqu'on y installe, temporairement ou définitivement, par exemple, une canalisation de dérivation, un dispositif d'obturation ou tout autre type d'outil. Cet élément tubulaire peut notamment faire partie d'un raccord de dérivation en T. Par raccord de dérivation en T, on entend désigner tout raccord de dérivation comprenant un élément tubulaire approximativement perpendiculaire à la tuyauterie sur lequel on l'installe, équipé à son extrémité d'un dispositif d'obturation amovible et muni d'un embout latéral auquel peut être raccordée une canalisation de dérivation que l'on désire alimenter en fluide provenant de la tuyauterie principale sur laquelle ledit raccord est installé. Des exemples détaillés de tels raccords en T sont décrits dans le document EP 580222 (SOLVAY), qui est incorporé par référence à la présente demande, ainsi que dans les documents qui y sont cités.

De manière plus précise, l'invention concerne également un dispositif d'obturation d'une tuyauterie, destiné à coopérer avec un élément essentiellement tubulaire fixé perpendiculairement à la tuyauterie, qui se caractérise en ce qu'il comprend un tube amovible dans lequel peut coulisser une barre creuse à laquelle est fixée une tige souple autour de laquelle est disposé un ballon gonflable, un appendice asymétrique étant fixé à l'extrémité de ladite tige souple et ledit ballon étant en communication avec l'intérieur de la tige creuse.

L'extrémité du tube amovible doit avoir un diamètre permettant de l'introduire dans l'élément tubulaire, de manière à ce qu'elle puisse approximativement atteindre le niveau de l'orifice percé dans la paroi de la tuyauterie. Pour rendre ce positionnement plus aisé, il est en outre souhaitable que le tube amovible comporte, à ou à proximité de son extrémité, un moyen de retenue permettant de le positionner axialement avec précision. Ce moyen de retenue peut par exemple consister en un épaulement ou en une bague.

La tige souple est fixée à la barre creuse de façon à éviter toute possibilité de rotation relative. Par ailleurs, on préfère que la tige souple soit fixée à la barre creuse à proximité de l'extrémité de cette dernière.

Le tube amovible a de préférence une longueur telle qu'il puisse entièrement contenir la tige souple ainsi que le ballon et l'appendice qui lui sont fixés. Ainsi, lorsque le tube amovible n'est pas installé dans un élément tubulaire, par exemple lors de son transport, le ballon y est parfaitement protégé de toute dégradation.

Selon une variante avantageuse de l'invention, afin d'éviter toute fuite de fluide sous pression en provenance de la tuyauterie lors de l'installation du ballon, le tube amovible a un diamètre extérieur légèrement inférieur au diamètre intérieur de l'élément tubulaire, ce qui permet aux dispositifs d'étanchéité dont est généralement muni ce dernier de jouer leur rôle, c'est-à-dire d'empêcher tout passage de fluide sous pression entre la paroi extérieure du tube amovible et la paroi intérieure de l'élément tubulaire, avant le gonflage du ballon ou après son dégonflage.

Le tube amovible et la barre creuse qui y coulisse présentent de préférence une rigidité élevée, et peuvent être constitués de tout matériau usuel, par exemple d'acier inoxydable ou d'une matière plastique adéquate. La barre a pour but de permettre le déplacement du ballon à partir de l'extérieur de la tuyauterie, par exemple sous l'effet d'un effort manuel. Afin de permettre d'alimenter le ballon par un fluide sous pression en vue de son gonflage, l'intérieur de la barre creuse est relié de manière étanche, d'un côté au ballon, et de l'autre à une source de fluide sous pression extérieure au dispositif proprement dit. En outre, cette barre peut pivoter autour de son axe, ce qui permet d'orienter le ballon dans la direction voulue, de manière à ce qu'il vienne se placer du côté souhaité de l'orifice. L'extrémité supérieure de la barre creuse est avantageusement munie d'un signe, ou a une forme, permettant de déterminer aisément son orientation, qui correspond à l'orientation de l'appendice fixé à l'extrémité de la tige flexible. De préférence, l'extrémité supérieure de la barre creuse a en outre une forme ergonomique permettant de la faire aisément pivoter et coulisser.

Enfin, il est souhaitable que la barre creuse comporte, à ou à proximité de son extrémité, un moyen de retenue axiale, par exemple un épaulement ou une bague, permettant d'empêcher que cette barre ne soit, accidentellement, totalement extraite du tube amovible, ce qui provoquerait une fuite du fluide sous pression présent dans la tuyauterie. Avantageusement, ces moyens de retenue axiale peuvent également servir à guider latéralement la barre creuse lors de son coulissement dans le tube amovible.

Il est à noter que les références aux extrémités "supérieures" et "inférieures" de certains éléments ne sont faites que pour des raisons de simplicité, et n'ont aucun caractère limitatif; autrement dit, il n'est pas indispensable d'utiliser le dispositif de l'invention en position verticale.

En vue d'en garantir l'étanchéité, il est souhaitable que ce dispositif comprenne en outre au moins un dispositif d'étanchéité entre la barre creuse et le tube amovible. Tout dispositif d'étanchéité connu permettant un coulissement et un pivotement peut être utilisé à cette fin, par exemple une rondelle plate en caoutchouc dont le diamètre intérieur soit légèrement supérieur au diamètre extérieur de la barre creuse.

Comme exposé ci-dessus, le ballon est disposé autour de la tige souple. Cette indication doit être interprétée de la façon la plus large : ainsi, le ballon peut tout aussi bien être traversé par la tige souple, qu'avoir une forme sensiblement toroïdale et entourer cette dernière. De même, à son sommet, le ballon peut indifféremment être fixé à la tige souple ou à l'appendice qui y est fixé. L'ouverture du ballon, quant à elle, doit être en communication avec l'intérieur de la barre creuse, par laquelle peut être injecté un fluide de gonflage.

Le fonctionnement de ce dispositif est le suivant : on ôte tout d'abord le dispositif d'obturation amovible qui obture généralement l'extrémité de l'élément tubulaire, ce qui ne provoque généralement aucune fuite grâce aux dispositifs d'étanchéité dont il est le plus souvent pourvu. Ensuite, on insère dans cet élément tubulaire le dispositif conforme à l'invention décrit ci-dessus; plus précisément, on insère l'extrémité du tube amovible dans l'élément tubulaire, jusqu'à ce que le moyen de positionnement du tube (épaulement, etc.) interrompe son insertion. On fait alors pivoter la barre creuse, dont l'extrémité supérieure est accessible, afin d'orienter l'appendice fixé à l'extrémité de la tige souple, elle-même généralement fixée à proximité de l'extrémité de la barre rigide, en direction de la section de tuyauterie dans laquelle on souhaite installer le ballon (généralement en amont, comme exposé plus haut), en s'aidant du signe, ou de la forme, que présente l'extrémité supérieure de la barre creuse. On enfonce alors celle-ci dans le tube amovible, ce qui provoque l'entrée du ballon dans la tuyauterie, et plus précisément dans la section désirée de la tuyauterie. Une fois la barre creuse enfoncée dans le tube amovible, le ballon se trouve à l'endroit où il doit être installé; on peut dès lors le gonfler, par exemple en ouvrant la vanne mettant en communication une source de fluide sous pression et la barre creuse, qui est elle-même connectée de manière étanche au ballon gonflable. Une fois le ballon gonflé, il suffit de le fermer, par exemple en refermant ladite vanne : la tuyauterie est à ce moment sectionnée, et des travaux peuvent sans danger être accomplis sur la section de tuyauterie ainsi isolée.

Après la fin des travaux, il suffit de dégonfler le ballon, de le faire réintégrer l'intérieur du tube amovible par traction sur la barre creuse, et de retirer le tube amovible de l'élément tubulaire.

Les figures annexées illustrent, de façon non limitative, différentes variantes de réalisation du dispositif de l'invention.

La figure 1 représente, en coupe longitudinale et de manière schématique, une tuyauterie munie d'un raccord de dérivation en T dans laquelle on a partiellement introduit un ballon conforme à l'invention, qui n'est toutefois pas gonflé.

La figure 2 représente la situation après le gonflage de ce ballon.

La figure 3 représente un dispositif conforme à l'invention, comprenant un ballon gonflable muni d'un appendice asymétrique et un tube amovible permettant son insertion sans fuites.

La figure 4 décrit schématiquement, en coupe, un dispositif antérieurement connu.

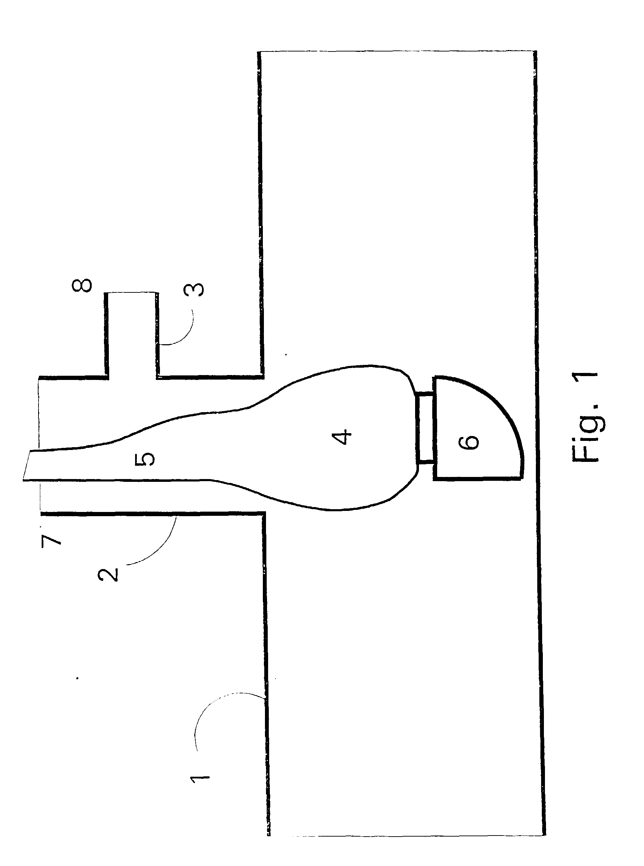

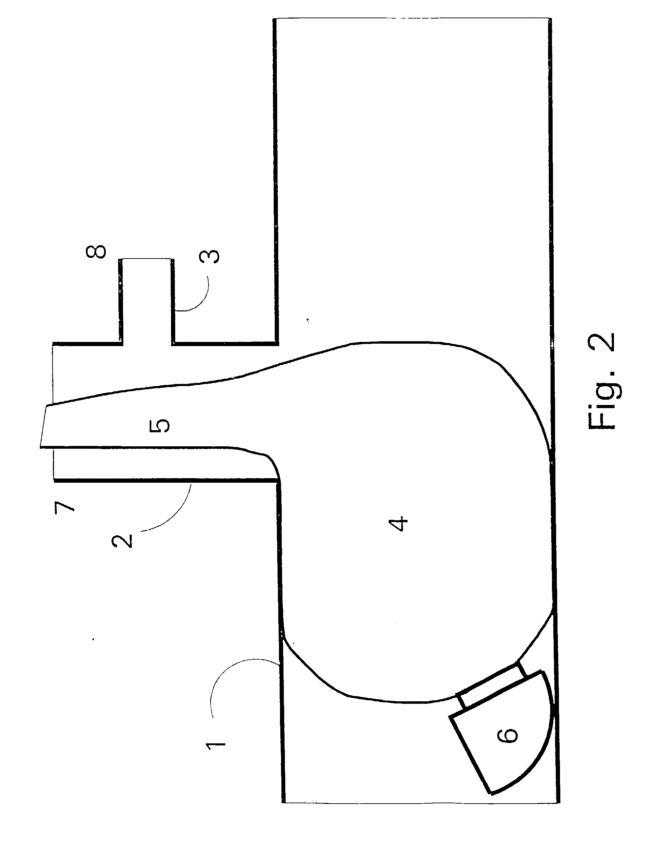

Dans les figures 1 et 2, on distingue essentiellement une tuyauterie (1) munie d'un raccord de dérivation en T comprenant un élément tubulaire (2) présentant un embout latéral (3) auquel peut être raccordée une canalisation de dérivation (non représentée). Les extrémités de l'élément tubulaire (7) et de l'embout latéral (8) peuvent toutes deux être fermées de manière étanche au moyen de dispositifs d'obturation amovibles tels que des capuchons filetés (non représentés). Pour des raisons de clarté, on n'a pas non plus représenté les dispositifs d'étanchéité équipant généralement ces deux extrémités.

Par l'élément tubulaire (7), on a introduit un ballon conforme à l'invention (4), muni d'un appendice asymétrique (6) fixé sur une zone du ballon opposée à son ouverture (5).

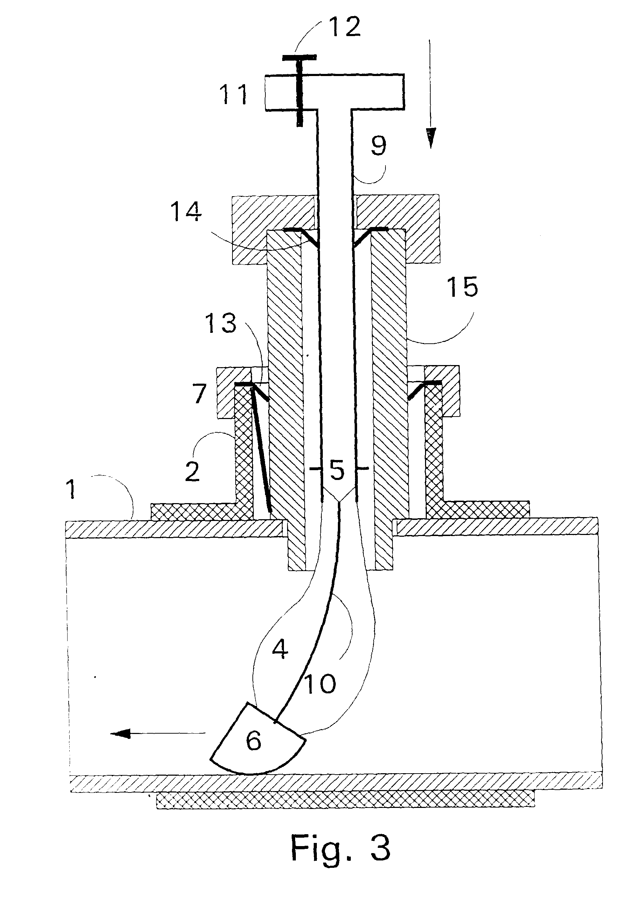

Dans la figure 3, on distingue une tuyauterie (1) munie d'un élément tubulaire perpendiculaire à celle-ci (2). Cet élément tubulaire est muni à son extrémité supérieure d'un dispositif d'étanchéité comprenant un anneau plat en caoutchouc (13), assurant l'étanchéité lorsqu'un tube de diamètre convenable y est inséré. Son dispositif d'étanchéité comprend également, sous cet anneau, une valve constituée d'un matériau élastomérique, comprenant une partie centrale circulaire reliée à un anneau périphérique par une charnière : cette valve assure l'étanchéité lorsqu'aucun tube n'est inséré dans l'élément tubulaire et que son dispositif d'obturation amovible a été retiré. Ces deux parties du dispositif d'étanchéité de l'élément tubulaire sont toutes deux maintenues par une bague filetée (7). On a inséré dans cet élément tubulaire un tube amovible (15), dont l'extrémité inférieure présente un épaulement permettant de limiter son enfoncement à l'intérieur de la tuyauterie. L'extrémité supérieure de ce tube amovible est munie d'un dispositif d'étanchéité (14) empêchant toute fuite entre l'intérieur de ce tube et l'extérieur de la barre creuse et rigide (9) qui peut y coulisser et peut pivoter autour de son axe. A l'extrémité inférieure (5) de cette barre creuse et rigide (9) est fixée une tige souple (10), à l'extrémité de laquelle est fixée un appendice asymétrique (6). Autour de cette tige souple (10) est disposé un ballon gonflable (4), étanche par rapport à la tuyauterie et relié uniquement à l'extrémité inférieure (5) de la barre creuse (9). Ce ballon peut donc être gonflé par l'intermédiaire de la barre creuse (9), dont l'extrémité supérieure est munie d'un embout (11) permettant la connexion à une source de fluide sous pression (non représentée). L'extrémité supérieure de la barre creuse (9) est en outre munie d'une vanne (12), représentée de façon schématique, et sa forme facilite la manipulation (coulissement et rotation) de la barre. L'orientation de celle-ci correspond en outre à l'orientation de l'appendice (6), ce qui permet de déterminer facilement comment il convient de faire pivoter la barre creuse (9) en vue d'installer le ballon à l'endroit voulu.

Sur la figure 4, qui représente très schématiquement un dispositif appartenant à l'art antérieur, on distingue une tuyauterie horizontale dans la paroi de laquelle a été percé un orifice, par lequel on a introduit un tube dont l'extrémité est munie d'une ouverture latérale, ainsi que d'un arrondi intérieur, de manière à obliger le ballon (non-représenté), initialement disposé à l'intérieur de ce tube, à en sortir dans une direction bien déterminée (indiquée par la flèche). Sur cette figure, on a omis de représenter l'élément tubulaire perpendiculaire à la tuyauterie et ses dispositifs d'étanchéité.

## Revendications

1. Dispositif d'obturation d'une tuyauterie, destiné à coopérer avec un élément essentiellement tubulaire (2) fixé perpendiculairement à la tuyauterie, ledit dispositif comprenant un tube amovible (15) dans lequel peut coulisser une barre creuse (9) à laquelle est fixée une tige souple (10) autour de laquelle est disposé un ballon gonflable (4), un appendice étant fixé à l'extrémité de ladite tige souple et ledit ballon (4) étant en communication avec l'intérieur de la barre creuse, caractérisé en ce que l'appendice (6) a une forme asymétrique apte à favoriser la déviation du ballon dans un sens bien précis lors de son installation dans une tuyauterie.

2. Dispositif selon la revendication 1, dans lequel le tube amovible (15) a un diamètre extérieur légèrement inférieur au diamètre intérieur de l'élément tubulaire (2).

3. Dispositif selon l'une des revendications 1 ou 2, comprenant en outre au moins un dispositif d'étanchéité (14) entre la barre creuse (9) et le tube amovible (15).

4. Dispositif selon l'une des revendications 1-3, dans lequel le tube amovible comporte, à ou à proximité de son extrémité, un moyen de retenue permettant de le positionner axialement avec précision.

## Patentansprüche

1. Vorrichtung zum Verschließen einer Rohrleitung, die dazu bestimmt ist, mit einem im wesentlichen rohrförmigen Element (2) zusammenzuwirken, das senkrecht zur Rohrleitung befestigt ist, wobei die Vorrichtung ein entfernbares Rohr (15) umfaßt, in welchem eine Hohlstange (9) gleiten kann, an der ein nachgiebiger Schaft (10) befestigt ist, um welchen herum ein aufblasbarer Ballon (4) angeordnet ist, wobei ein Appendix am Ende des nachgiebigen Schaftes befestigt ist und wobei der Ballon (4) mit dem Inneren der Hohlstange kommuniziert, dadurch gekennzeichnet, daß der Appendix (6) asymmetrische Gestalt hat, die das Ausweichen des Ballons bei seiner Montage in die Rohrleitung in einer präzisen Richtung favorisiert.

2. Vorrichtung nach Anspruch 1, bei welcher das entfernbare Rohr (15) einen geringfügig kleineren Außendurchmesser als der Innendurchmesser des rohrförmigen Elementes (2) aufweist.

3. Vorrichtung nach einem der Ansprüche 1 oder 2, umfassend außerdem mindestens eine Dichtvorrichtung (14) zwischen der Hohlstange (9) und dem entfernbaren Rohr (15).

4. Vorrichtung nach einem der Ansprüche 1 bis 3, bei welcher das entfernbare Rohr in der Nähe seines Endes ein Rückhaltemittel aufweist, welche seine genaue axiale Positionierung erlaubt.

## Claims

1. Device for plugging a pipeline, which is intended to co-operate with an essentially tubular element (2) fixed at right-angles to the pipeline, the said device comprising a removable tube (15) into which can be slid a hollow bar (9) to which is attached a flexible rod (10) around which is arranged an inflatable balloon (4), an appendage being fixed to the end of the said flexible rod, and the said balloon (4) being in communication with the inside of the hollow bar, characterized in that the appendage (6) has an asymmetric shape able to encourage the balloon to deflect in a very precise direction as it is being installed in a pipeline.

2. Device according to Claim 1, in which the removable tube (15) has an outside diameter which is slightly smaller than the inside diameter of the tubular element (2).

3. Device according to one of Claims 1 and 2, further comprising at least one device (14) providing sealing between the hollow bar (9) and the removable tube (15).

4. Device according to one of Claims 1-3, in which the removable tube comprises at, or near to, its end, a retaining means allowing it to be positioned axially with precision.
